Europäisches Patentamt

European Patent Office

Office européen des brevets

(19)

(11) Veröffentlichungsnummer: **0 202 395**
**A2**

(12) **EUROPÄISCHE PATENTANMELDUNG**

(21) Anmeldenummer: 86101840.6

(22) Anmeldetag: 13.02.86

(51) Int. Cl.⁴: **G 01 B 11/00**

(30) Priorität: 19.02.85 DE 3505694

(43) Veröffentlichungstag der Anmeldung:
26.11.86 Patentblatt 86/48

(84) Benannte Vertragsstaaten:
AT BE CH DE FR GB IT LI LU NL SE

(71) Anmelder: STUKENBROCK, Heiner
Niedersachsenstrasse 40
D-3012 Langenhagen 1(DE)

(72) Erfinder: STUKENBROCK, Heiner
Niedersachsenstrasse 40
D-3012 Langenhagen 1(DE)

(74) Vertreter: Junius, Walther, Dr.
Wolfstrasse 24
D-3000 Hannover 81(DE)

(54) Vorrichtung zur Messung oder Abweichung eines Rotors von seiner Soll-Lage.

(57) Die Erfindung betrifft eine Vorrichtung zur Messung der Abweichung eines Rotors von seiner Solllage, insbesondere zur Messung der Kippauslenkung eines magnetisch gelagerten Rotors. Der Erfindung liegt die Aufgabe zugrunde, die Kippauslenkung eines Rotors in einfacher Weise sehr viel präziser als bisher zu messen. Die erfindungsgemäße Vorrichtung zeichnet sich dadurch aus, daß an dem Rotor (1) mindestens ein von der Drehachse (13) durchsetzter, schräg zur Drehachse (13) angeordneter Spiegel (6) angebracht ist, daß eine einen gebündelten Strahl (14) in Achsrichtung des in Soll-Lage befindlichen Rotors (1) aussendende Strahlungsquelle (8) feststehend angeordnet ist, und daß Eintrittsfenster (9) von feststehend angeordneten Empfängern (12) im Bereich des auf einer Kreisscheiben- oder Kegelmantelfläche kreisenden vom Spiegel (6) reflektierten Strahles (15) angeordnet sind.

EP 0 202 395 A2

./...

FIG.1

Vorrichtung zur Messung der Abweichung eines
Rotors von seiner Soll-Lage

Die Erfindung betrifft eine Vorrichtung zur Messung der Abweichung eines Rotors von seiner Soll-Lage, insbesondere zur Messung der Kippauslenkung eines magnetisch gelagerten Rotors.

Beschrieben ist die übliche Ermittlung der Kippauslenkung am Beispiel magnetgelagerter Satellitendrallräder in der Patentschrift DE 2263o96 C 3.

Der für die Magnetlagerregelung erforderliche Istwert der Kippauslenkung wird dort von denselben Sensoren abgeleitet, die auch die Lateralposition des Rotors erfassen.

Für Lateral- und Kippregelung werden jedoch wegen unterschiedlicher Präzisions- und Frequenzganganforderungen getrennte Regler verwendet.

Die Wirkung der Kippregelung, an die wegen der Kreiseleigenschaften schnellaufender Rotoren besonders im Bereich der Kreiseleigenfrequenzen hohe Anforderungen gestellt werden, ist bisher durch Drift- und Rauschprobleme der meist induktiven Lagesensoren begrenzt.

Der Erfindung liegt die Aufgabe zugrunde, die Kippauslenkung eines Rotors in einfacher Weise sehr viel präziser als bisher zu messen.

Die erfindungsgemäße Vorrichtung zeichnet sich dadurch aus, daß an dem Rotor mindestens ein von der Drehachse durchsetzter, schräg zur Drehachse angeordneter Spiegel angebracht ist, daß eine einen gebündelten Strahl in Achsrichtung des in Soll-Lage befindlichen Rotors aussendende Strahlungsquelle feststehend angeordnet ist, und daß Eintrittsfenster von feststehend angeordneten Empfängern im Bereich des auf einer Kreisscheiben- oder Kegelmantelfläche kreisenden vom Spiegel reflektierten Strahles angeordnet sind.

Mit dieser Vorrichtung läßt sich die Kippauslenkung hochgenau messen. Mit dieser hochgenauen Messung läßt sich dann eine präzise Steuerung der Magnetlager realisieren. Der der Messung dienende Strahl läßt sich sehr scharf bündeln und wegen eines sehr geringen Strahlquerschnittes besonders gut für die Messung ausnutzen, wenn die Strahlungsquelle ein Laser ist.

Um die Eintrittsfenster möglichst dicht nebeneinander in geringer Entfernung von dem rotierenden Spiegel anordnen zu können, ist es zweckmäßig, wenn die Eintrittsfenster die Stirnseiten von zu Empfängern führenden Lichtleitern sind.

Zweckmäßig ist es, wenn die Eintrittsfenster in Linien parallel zur Drehachse des Rotors und/oder in Ebenen senkrecht zur Drehachse des Rotors in Soll-Lage angeordnet sind. Mit dieser Ausgestaltung der Vorrichtung läßt sich die Ist-Lage der Rotorachse besonders präzis orten, so daß auch eine besonders exakte Gegensteuerung zur Rückführung in die Soll-Lage möglich ist.

Bei einer Nutzung der Vorrichtung für die Steuerung der Magnete einer Magnetlagerung ist es zweckmäßig, wenn die Eintrittsfenster in denselben Winkelbereichen um die Rotorachse angeordnet sind, in denen auch die Pole der magnetischen Aufhängevorrichtung angeordnet sind.

Dabei ist es vorteilhaft, wenn Eintrittsfenster auf Randlinien bestimmter gedachter Ebenen angeordnet sind, die durch die Rotorachse in Soll-Lage hindurchgehen.

Da im allgemeinen die Pole der Lagermagneten im $90^o$ Winkelabstand um den Rotor herum angeordnet sind, ist es vorteilhaft, wenn vier im wesentlichen in axialer Richtung angeordnete Reihen von Empfängern im $90^o$ Winkelabstand um den Rotor angeordnet sind.

Durch auf einer den Fokusbereich des rotierenden, fokussierten Laserstrahls beschreibenden Zylinder- oder Toroidfläche angeordnete Sensoren können so, je nach Länge des rotierenden Lichtzeigers sehr präzise die Kippauslenkungen der Rotorachse sowie auch die axiale Position des Rotors gemessen werden.

Baulich läßt sich der Spiegel am Rotor in einfachster Weise dadurch lagern, daß der Spiegel in einem Materialklotz befindlich ist, dessen der Strahlungsquelle zugeordneter Teil durchsichtig ist.

Dadurch läßt sich das Problem der Unwuchtbeseitigung hervorragend lösen, insbesondere dann, wenn der Spiegel in der Teilungsebene eines Doppelprismenblockes liegt.

Dabei ist es vorteilhaft, wenn der Materialklotz an der Stirnseite des Rotors angebracht ist und an der Anbringungsstelle die gleichen Dimensionen wie der Rotor an der Stirnseite hat. Der Spiegel liegt hierbei in einer Zylinderlinse, deren auf die Fokussierung des Strahles wirkende Ablenkung dadurch kompensiert wird, daß die Einfallsfläche an der Stirnseite entsprechend linsenförmig ausgebildet wird. Auch bei Verwendung eines quader- oder würfelförmigen Doppelprismenblockes kann die Luftreibung durch ein darübergestülptes transparentes Rohr vermindert werden, was außerdem die mechanische Stabilität gegenüber Fliehkräften erhöht. Durch diese Ausgestaltungen ist die sonst durch den Spiegel erzeugte Luftreibung besonders gering. Eine sonst durch den sich drehenden Spiegel auftretende Störung der exakten Lagerung wird auf diese Weise sicher vermieden.

Aus Fertigungsgründen ist es vorteilhaft, daß der Klotz als ansteckbares oder anschraubbares Bauteil ausgebildet ist.

Baulich ist es weiter vorteilhaft, wenn sämtliche Eintrittsfenster in einem mit Öffnungen für die Aufnahme der Eintrittsfenster versehenen Ring angeordnet sind.

Zur einfachen Einjustierung vor Betriebsbeginn ist es zweckmäßig, wenn der Ring mit einer Justiervorrichtung versehen ist.

Will man mit der erfindungsgemäßen Vorrichtung bei jedem Vorbeigehen des reflektierten Lichtstrahles an einer achsparallelen Eintrittsfensterreihe die Information haben, ob eine Abweichung von der Soll-Lage eine Kippauslenkung oder eine Achsialverschiebung des Rotors ist, ist es zweckmäßig, daß zwei Spiegel im Klotz mit anderer, vorzugsweise entgegengesetzter Anordnung, vorgesehen sind, von denen der der Lichtquelle zugewandte Spiegel halbdurchlässig ist. Hierbei ist es zweckmäßig, wenn zwischen den Spiegeln eine Linse angeordnet ist, um die Fokussierung des Lichtstrahles zu optimieren.

Bei dieser Ausführungsform ist es vorteilhaft, wenn zwei Ringe mit Eintrittselementen nebeneinander gleichachsig angeordnet sind und durch Justierelemente miteinander verbunden sind, damit die Vorrichtung geringfügigen Abweichungen der Spiegelstellung angepaßt werden kann.

Das Wesen der Erfindung ist nachstehend anhand eines in der Zeichnung schematisch dargestellten Ausführungsbeispieles näher erläutert. Es zeigen:

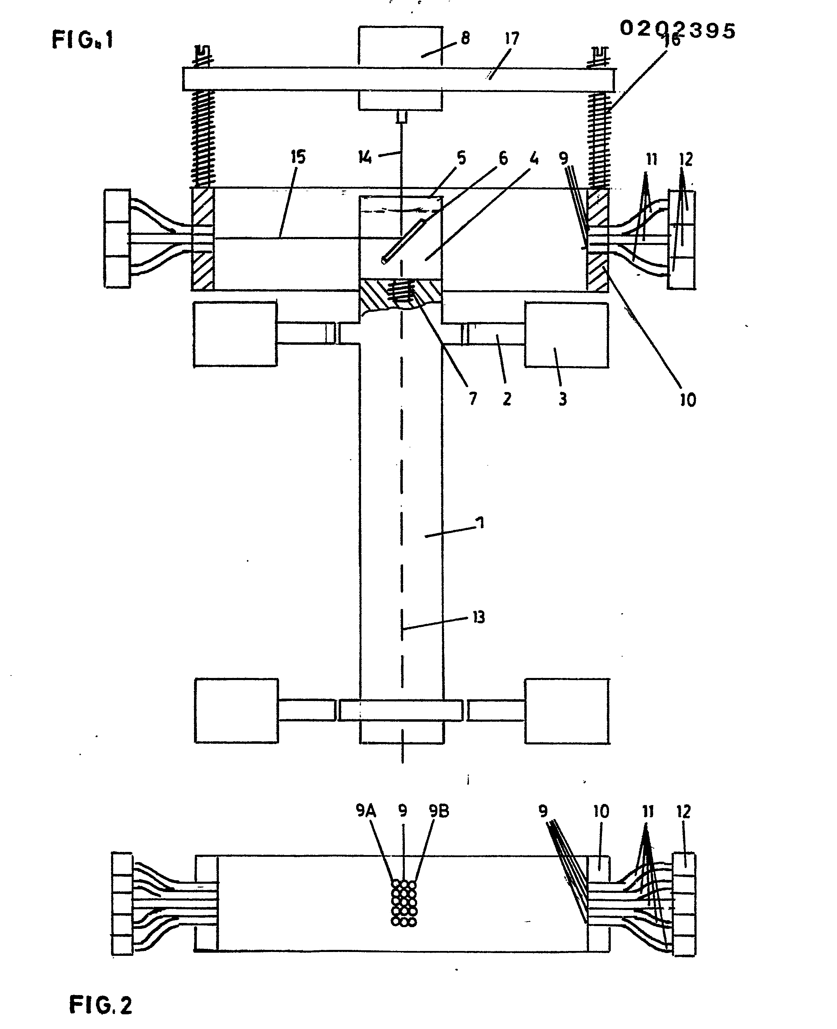

Fig. 1  einen Schnitt durch eine Vorrichtung,
Fig. 2  einen Schnitt durch einen Ring,
Fig. 3  eine Ansicht von oben auf die Vorrichtung der Fig. 1 unterhalb des Lasers,
Fig. 4  einen Schnitt durch eine andere Anordnung,
Fig. 5  ein Blockschaltbild eines Differenzsensors.
Der Rotor 1 ist magnetisch zwischen Magnetpolen 2 von Magneten 3 aufgehängt. Er trägt auf seiner einen Stirnseite einen Klotz 4 aus durchsichtigem Material von den gleichen Querschnittsabmessungen wie die Stirnseite des Rotors 1. Dieser Klotz weist eine Stirnseite 5 auf, welche eine Ebene senkrecht zur Rotorachse 13 bildet.

Es ist ein Laser 8 oberhalb des Rotors 13 so angeordnet, daß der von ihm erzeugte (Licht-)Strahl sich in der Achse 13 des Rotors 1 befindet, wenn sich der Rotor 1 in seiner Soll-Lage befindet. Der von dem Laser 8 ausgesandte Strahl wird von dem Spiegel 6 derart reflektiert, daß der reflektierte Strahl 15 während der Drehung des Rotors 1 in Eintrittsfenster 9 des Ringes lo fällt. Der Ring lo ist konzentrisch zur Achse 13 des Rotors 1 in Soll-Lage ausgerichtet. Die in dem Ring lo befindlichen Reihen von Eintrittsfenster 9 sind so angeordnet, daß jede Reihe eine achsparallele Linie bildet, daß jeder Reihe die gleiche Anzahl von Eintrittsfenstern aufweist und daß die Randeintrittsfenster jeder Reihe in zwei gedachten Ebenen liegen, welche senkrecht zur Rotorachse 13 in Soll-Lage befindlich sind.

Von den Eintrittsfenstern 9 führen Lichtleiter 11 zu Empfängern 12, die bei einfallendem Licht ihre Leitfähigkeit ändern oder in anderer Weise einen Impuls an eine Steuerungsvorrichtung abgeben, mit deren Hilfe der Stromfluß in den Magneten 3 gesteuert wird. Da der Strahl 14 des Lasers in einer bestimmten exakten Stellung zu den Reihen von Eintrittsfenstern befindlich sein muß, ist der Ring lo mittels Justierelementen 16 und Haltern 17 mit dem als Strahlungsquelle dienenden Laser 8 verbunden.

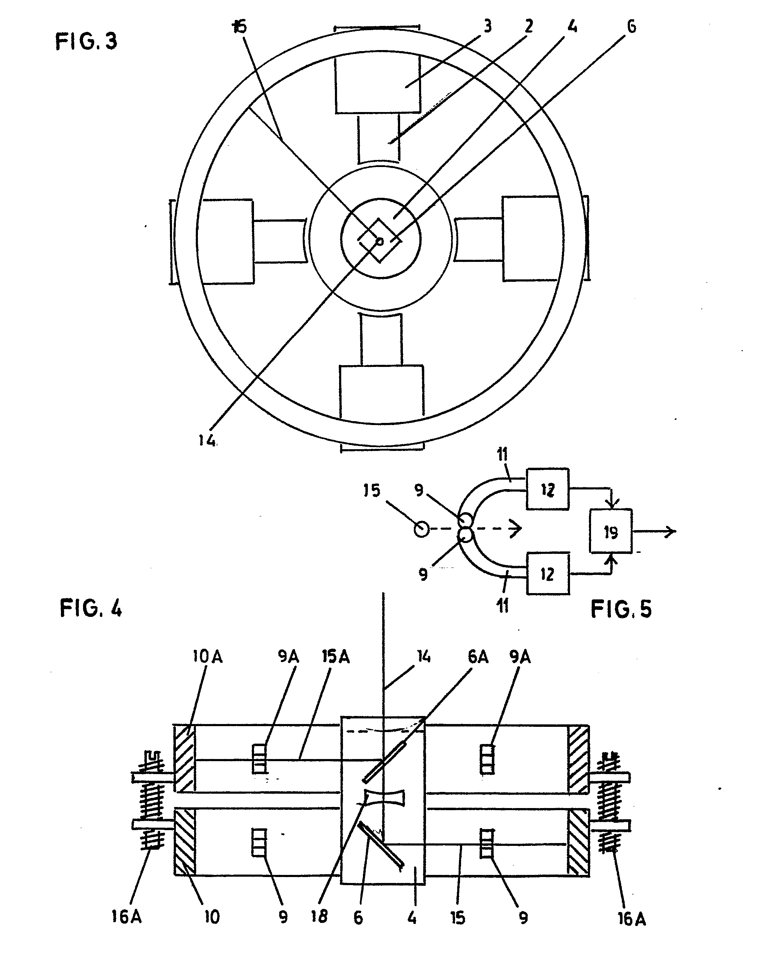

Wie Fig. 3, eine Ansicht der Vorrichtung aus der Ebene III-III in Pfeilrichtung, zeigt, sind bei vier Magnetpolen 2 vier Reihen von Eintrittsfenstern 9 vorgesehen.

Zusätzlich sind neben der einen Reihe von Eintrittsfenstern 9 noch eine weitere Reihe von Eintrittsfenstern 9A und zusätzlich noch eine Reihe von Eintrittsfenstern 9B angeordnet. Die Reihe der Eintrittsfenster 9A dient der Synchronisation der Steuervorrichtung, damit ein Ursprungsimpuls bereitgestellt werden kann. Die Reihe 9B kann für andere Steuervorgänge verwendet werden.

Im gezeichneten Ausführungsbeispiel sind jeweils fünf Eintrittsfenster in einer Reihe vorhanden. In das mittlere Eintrittsfenster fällt der reflektierte Strahl 15 immer dann, wenn sich der Rotor 1 in seiner Soll-Lage befindet. Fällt der reflektierte Strahl in andere Eintrittsfenster, befindet sich der Rotor nicht in seiner Soll-Lage. Um festzustellen, ob eine Kippabweichung des Rotors, die aus einer Achsabweichung und einer Radialabweichung von der Soll-Lage besteht, vorliegt oder ob eine reine Verschiebung des Rotors in axialer Richtung vorliegt, ist es zweckmäßig, eine Ausführungsform zu wählen, wie sie in Fig.4 schematisch dargestellt ist: Hier sind in dem Klotz 4 zwei Spiegel 6, 6A angeordnet, von denen der Spiegel 6A, der der Strahlungsquelle 8 zugewandt ist, halbdurchlässig ist. Den beiden Spiegeln 6 und 6A sind zwei Ringe 1o und 1oA zugeordnet, die miteinander durch Justierelemente 16A verbunden sind. Die Ringe 1o und 1oA werden so ein-

justiert, daß die reflektierten Strahlen 15 und 15A in der Rotor-Soll-Lage jeweils in die mittleren Eintrittsfenster 9 einfallen. Treten beim Rotieren des Rotors 1 Abweichungen von der Soll-Lage auf, die lediglich auf eine Achsverschiebung des Rotors 1 zurückzuführen sind, dann fallen die reflektierten Strahlen 15 und 15A in Eintrittsfenster, die von den mittleren Eintrittsfenster 9 in der gleichen Richtung und im gleichen Abstand entfernt liegen. Tritt aber eine Kippablenkung des Rotors auf, bei der die Ist-Lage der Rotorachse 13 gegenüber der Soll-Lage unter einem Winkel größer als 0 verläuft, dann fallen die reflektierten Strahlen 15 und 15A in Eintrittsfenster, die in verschiedenen Richtungen vom mittleren Eintrittsfenster liegen.

Als Eintrittsfenster 9 benutzt man zweckmäßigerweise die Stirnseiten der Lichtleiter 11, die zu den Empfängern 12 führen.

Vorzugsweise weist der Laser 8 eine Fokussierungsvorrichtung auf. Ist der Spiegel 6 innerhalb eines zylindrischen Materialklotzes 4 angeordnet, tritt durch die zylindrische Oberfläche eine gewisse Defokussierung auf. Um diese zu kompensieren, wird die Lichteintrittsfläche, nämlich die Stirnseite 5, zweckmäßigerweise entsprechend linsenförmig ausgebildet.

Es besteht aber auch die Möglichkeit, den Spiegel 6 zwischen zwei quaderförmigen Prismen anzuordnen. Damit die Außenflächen dieses Quaders nicht einen erhöhten Luftreibungswiderstand darstellen, ist es zweckmäßig, wenn der durch die Prismen gebildete Quader in ein transparentes Rohr eingesetzt ist, der den quaderförmigen Doppelprismenblock symmetrisch zur Drehachse umschließt.

Es kann zweckmäßig sein, die Lichteintrittsfläche 5 des Doppelprismenblockes mit einer transparenten, planparallelen Platte zu bedecken.

Aus Gründen einer einwandfreien Fokussierung ist es zweckmäßig, wenn im Ausführungsbeispiel der Fig. 4 zwischen den beiden Spiegeln 6, 6A eine zusätzliche Linse 18 angeordnet ist.

Eine sehr vorteilhafte Variante besteht darin, daß die Eintrittsfenster 9 paarweise eng benachbart auf einer in achsparalleler Richtung gelegenen gedachten Linie angeordnet sind, und daß die Empfänger 12 mit ihren Ausgängen an die Eingänge eines Differenzbildners 19 geführt sind. Dieser Differenzbildner 19 ist mit seinem Ausgang dann an den Eingang der Steuerungsvorrichtung angeschlossen. Läuft der vom Spiegel 6 reflektierte Lichtstrahl 15 auf der vorgesehenen Bahn in Sollstellung, so fällt das Licht des reflektierten Lichtstrahles 15 in beide Eintrittsfenster 9 (Fig. 5) in gleicher Lichtmenge ein, die Empfänger 12 geben an ihrem Ausgang ein gleichgroßes Signal ab, der Differenzbildner 9, an dessen Eingänge die Ausgänge der Empfänger 12 angeschaltet sind, gibt die Differenz 0 an seinem Ausgang an, d.h. der Lichtstrahl befindet sich in Soll-Lage. Wandert der Lichtstrahl aus dieser Soll-Lage aus, so erhält das eine

- lo -

Eintrittsfenster 9 mehr Licht als das andere, der Differenzbildner gibt an seinem Ausgang ein Signal ab, welches proportional der Differenz der von den Empfängern 12 empfangenen Lichtmengen ist und auch gleichzeitig die Richtung der Auswanderung des Lichtstrahles angibt. Das kann in hervorragender Weise zur Steuerung ausgenutzt werden, indem der Ausgang des Differenzbildners an eine Steuerungsvorrichtung in der Regelanlage angeschlossen ist, die auf die Magneten einwirkt, die den Rotor lagern. Vorteilhaft ist es hierbei, wenn der auftreffende Lichtstrahl einen Querschnitt aufweist, der ebenso groß oder kleiner als die Fläche eines Eintrittsfensters ist. Der in dieser Weise gebildete Differenzsensor ist einfach im Aufbau und hat eine hervorragende Wirkung.

Es ist ein besonderer Vorteil der Erfindung, den Rotor eines Drehspiegels eines Zeilenscanners (Zeilenabtasters) mit dieser Vorrichtung hochgenau zu lagern.

Liste der Bezugszeichen

1 Rotor

2. Magnetpol

3 Magnet

4 Klotz aus durchsichtigem Material

5 Stirnseite

6 Spiegel

7 Befestigungselement (Schraube)

8 Laser

9 Eintrittsfenster

lo Ring

11 Lichtleiter

12 Empfänger

13 Rotorachse

14 Strahl

15 reflektierter Strahl

16 Justierelemente

17 Halter

18 Linse

Ansprüche :

1. Vorrichtung zur Messung der Abweichung eines Rotors von seiner Soll-Lage, insbesondere zur Messung der Kippauslenkung eines magnetisch gelagerten Rotors,
dadurch gekennzeichnet,
daß an dem Rotor (1) mindestens ein von der Drehachse (13) durchsetzter, schräg zur Drehachse (13) angeordneter Spiegel (6) angebracht ist,
daß eine einen gebündelten Strahl (14) in Achsrichtung des in Soll-Lage befindlichen Rotors (1) aussendende Strahlungsquelle (8) feststehend angeordnet ist,
und daß Eintrittsfenster (9) von feststehend angeordneten Empfängern (12) im Bereich des auf einer Kreisscheiben- oder Kegelmantelfläche kreisenden vom Spiegel (6) reflektierten Strahles (15) angeordnet sind.

2. Vorrichtung nach Anspruch 1,
dadurch gekennzeichnet,
daß die Strahlungsquelle (8) ein Laser ist, der vorzugsweise eine Fokussierungsvorrichtung für den Strahl aufweist.

3. Vorrichtung nach Anspruch 1,
dadurch gekennzeichnet,
daß die Eintrittsfenster (9) die Stirnseiten von zu Empfängern führenden Lichtleitern (11) sind.

4. Vorrichtung nach Anspruch 1,
   dadurch gekennzeichnet,
   daß die Eintrittsfenster (9) in Linien in
   parallel zur Drehachse (13) des Rotors (1) und/
   oder in im wesentlichen senkrecht zur Drehachse (13)
   angeordneten Ebenen des Rotors (1) in Soll-Lage
   angeordnet sind.

5. Vorrichtung nach Anspruch 1 und/oder 4,
   dadurch gekennzeichnet,
   daß die Eintrittsfenster (9) in denselben Winkelbereichen um die Rotorachse (13) angeordnet sind,
   in denen auch die Pole (2) der magnetischen Aufhängevorrichtung (3) angeordnet sind, wobei
   vorzugsweise vier im wesentlichen in axialer
   Richtung angeordnete Reihen von Empfängern (9)
   im 9o° Winkelabstand um den Rotor (1) angeordnet
   sind.

6. Vorrichtung nach Anspruch 1, 4 und 5,
   dadurch gekennzeichnet,
   daß Eintrittsfenster (9) auf Randlinien, vorzugsweise Kreisen bestimmter gedachter senkrecht zur
   Solldrehachse liegenden Ebenen angeordnet sind.

7. Vorrichtung nach Anspruch 1,
   dadurch gekennzeichnet,
   daß der Spiegel (6) in einem Materialklotz (4)
   befindlich ist, dessen der Strahlungsquelle
   (8) zugeordneter Teil durchsichtig ist, und
   der vorzugsweise als ansteckbares oder anschraubbares Bauteil ausgebildet ist.

8. Vorrichtung nach Anspruch 1 und 7,
dadurch gekennzeichnet,
daß der Materialklotz (4) an der Stirnseite des
Rotors (1) angebracht ist und an der Anbringungsstelle die gleichen Dimensionen wie der Rotor (1)
an der Stirnseite hat, wobei vorzugsweise die
Einfallsfläche an der Stirnseite linsenförmig
ausgebildet ist.

9. Vorrichtung nach Anspruch 1,
dadurch gekennzeichnet,
daß die Eintrittsfenster (9) in einem mit
Öffnungen für die Aufnahme der Eintrittsfenster
(9) versehenen Ring (1o) angeordnet sind, der
vorzugsweise mit einer Justiervorrichtung (16)
versehen ist.

1o. Vorrichtung nach Anspruch 1,
dadurch gekennzeichnet,
daß zwei Spiegel (6, 6A) vorzugsweise mit einer
zwischengeschalteten Linse im Klotz (4) mit
anderer, vorzugsweise entgegengesetzter Anordnung, vorgesehen sind, von denen der der Lichtquelle (8) zugewandte Spiegel halbdurchlässig
ist, wobei vorzugsweise zwei Ringe (1o, 1oA) mit
Eintrittselementen (9) nebeneinander gleichachsig
angeordnet sind und durch Justierelemente (16A)
miteinander verbunden sind.

11. Vorrichtung nach Anspruch 7,
gekennzeichnet durch konvex-zylinderförmige Ausbildung der Lichtaustrittsfläche und der gegenüberliegenden Fläche eines
Doppelprismenblockes und konkavzylinderförmige
Ausbildung der Lichteintrittsfläche (5) mit
einer der konvexen Fläche gleichen Krümmung, wobei vorzugsweise die Lichteintrittsfläche des
Doppelprismenblockes mit einer transparenten,
planparallelen Platte bedeckt ist.

12. Vorrichtung nach Anspruch 1,
dadurch gekennzeichnet,
daß ein transparentes Rohr den Doppelprismenblock zur Drehachse symmetrisch umschließt.

13. Vorrichtung nach Anspruch 1,
dadurch gekennzeichnet,
daß die Eintrittsfenster (9) paarweise eng benachbart auf einer in achsparalleler Richtung gelegenen
gedachten Linie angeordnet sind,
und daß die Empfänger (12) mit ihren Ausgängen an
die Eingänge eines Differenzbildners (19) geführt
sind.

FIG.1

0202395

FIG.2

FIG. 3

FIG. 4

FIG. 5